# EUROPÄISCHE PATENTSCHRIFT

(11) **EP 1 184 110 B1**
(45) Veröffentlichungstag und Bekanntmachung des Hinweises auf die Patenterteilung: **10.05.2006**
(21) Anmeldenummer: 01119557.5
(22) Anmeldetag: 14.08.2001
(51) Int. Cl.: B23B 27/04

(54) **Metallschneideeinsatz mit einer zwischen Stegen angeordneten Spanformfläche**
Cutting insert with chipbreaking area arranged between side protrusions
Plaquette de coupe avec brise-copeaux entre deux sailles latérales

(30) Priorität: 31.08.2000 DE 10042692
(43) Veröffentlichungstag der Anmeldung: 06.03.2002
(73) Patentinhaber: HARTMETALL-WERKZEUGFABRIK PAUL HORN GMBH, 72072 Tübingen (DE)
(72) Erfinder: Schäfer, Hans, 72810 Gomaringen (DE); Wüst, Dietmar, 72108 Rottenburg (DE)
(74) Vertreter: Bartels & Partner

(56) Entgegenhaltungen:
- EP-A- 0 360 774
- WO-A-01/60554
- US-A- 5 476 025
- US-A- 5 525 016
- US-A- 5 630 681
- US-A- 5 725 334

## Beschreibung

Die Erfindung betrifft eine Vorrichtung zum spanenden Bearbeiten von Werkstücken, insbesondere einen Metallschneideeinsatz, nach dem Oberbegriff des Anspruchs 1.

Eine derartige Vorrichtung ist beispielsweise aus der US 5,676,495 bekannt, bei der an die Schneidkante eine plan oder konvex geformte Schneid- oder Räumfläche anschließt, die in eine bis in den Bereich zwischen den Stegen hinein ragende plane Spannut übergeht. Die sich an die Spannut anschließenden Schrägflächen der Stege sind geradlinig ansteigend.

Aus der US 4,214,845 ist eine Vorrichtung bekannt, bei der entlang jeder Schneidkante eine Anschlußfläche verläuft, der in Richtung nach innerhalb der Vorrichtung eine Rampe mit einer konkaven Krümmung folgt.

Aus der EP 0 506 078 A2 sind Vorrichtungen bekannt mit einer Vielzahl von auf der Schneidfläche angebrachten Erhebungen, die im Wesentlichen parallel zueinander entlang der Schneidkante und mit rechtwinkliger Ausrichtung hierzu angeordnet sind, wobei die dazwischenliegende Fläche eine konkave Krümmung aufweist.

Aus der US 5,725,334 ist eine Vorrichtung mit einem entlang der Längsmittelachse angeordneten Spanformelement bekannt, das symmetrisch zur Längsmittelachse angeordnete keilförmige Rippen aufweist.

Aus der US 5,476,025 ist eine Vorrichtung bekannt, bei der um ein zentrisches Befestigungsloch herum sternförmig und symmetrisch Erhebungen angeordnet sind.

Auch aus der EP 0 310 239 A1 sind gattungsgemäße Vorrichtungen bekannt. Sie weisen ein Grundteil zum insbesondere klemmenden Festlegen der Vorrichtung in einer Halteeinrichtung und ein Bearbeitungsteil auf, das eine vordere Schneidkante und mindestens eine sich daran unter Bildung einer Ecke anschließende seitliche Schneidkante sowie eine im Bereich zwischen der vorderen und seitlichen Schneidkante angeordnete Spanformeinrichtung auf, die mindestens einen sich im Wesentlichen parallel zu der seitlichen Schneidkante erstreckenden Steg aufweist. Die Spanformstege der bekannten Vorrichtung bilden konkave vordere Spanabweisflächen aus, die sich an ihrem der vorderen Schneidkante zugewandten Ende mit der die Schneidkante bildende Schneidstegfläche unmittelbar vereinigen.

Aus der EP 0 387 636 A2 ist eine Spanformeinrichtung eines gattungsgemäßen Werkzeugs mit einer oder mehreren Noppen in Form von Kugelsegmenten, Kegel- und/oder Pyramidenstumpfen bekannt. Die im Bereich der vorderen Schneidkante angeordneten Noppen sind dabei stets in der Mitte zwischen den von der vorderen und den seitlichen Schneidkanten gebildeten Ecken angeordnet.

Aus der EP 0 382 555 A1 sind Stabilisierungsstege bekannt, die sich quer zu einer parallel zur seitlichen Schneidkante verlaufenden Spanrille erstrecken.

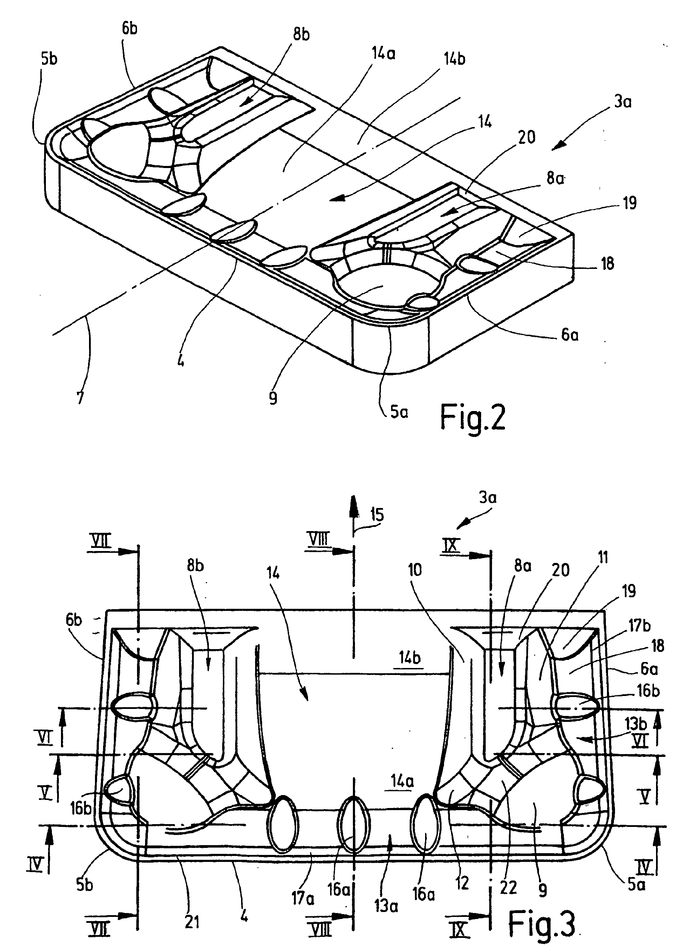

Aus der DE 195 27 696 A1 ist ein Schneideeinsatz oder Stecheinsatz bekannt, bei dem im Gegensatz zur vorliegenden Erfindung die Spanformeinrichtung nicht zwei parallel verlaufende Stege, sondern Nuten aufweist (Fig. 3b), wodurch sich völlig unterschiedliche Winkelgeometrien für die Spanformeinrichtung ergeben. In Querrichtung ist die Spanformfläche konvex gekrümmt ist (Fig. 3a).

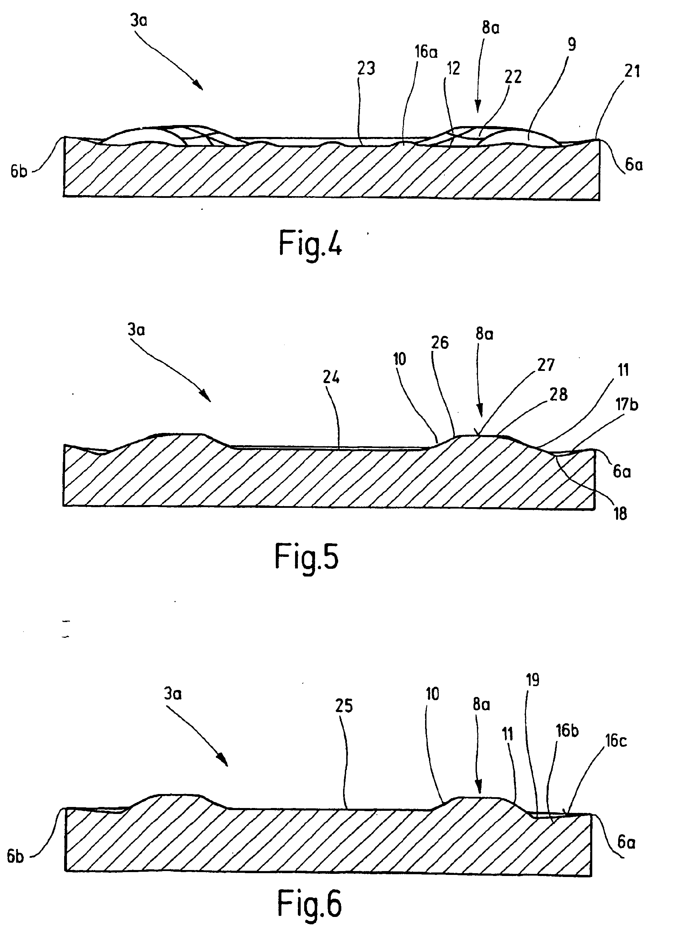

Aus der EP 0 775 544 A1 ist ein Schneideeinsatz bekannt, bei dem im Gegensatz zur vorliegenden Erfindung unter anderem die Spanformfläche in einer sich von der vorderen Schneidkante wegweisend erstreckenden Längsrichtung konkav gekrümmt ist (Fig. 5). In Querrichtung ist die Spanformfläche ebenfalls konkav gekrümmt ist (Fig. 6).

Zur Erhöhung der Wirksamkeit und der Effizienz beim spanenden Bearbeiten von Werkstücken ist eine Kontrolle der beim Bearbeiten entstehenden Werkstückspäne erforderlich. Beispielsweise soll die Spanlänge und/oder Spanbreite in Abhängigkeit des Werkstoffes des Werkstücks, der geforderten Bearbeitungsgenauigkeit und/oder der Bearbeitungsgeschwindigkeit innerhalb vorgebbarer Grenzen liegen. Außerdem sind die bekannten Vorrichtungen nicht zuletzt aufgrund der erforderlichen Härte spröde, was eine erhöhte Bruchgefahr zur Folge hat.

Der Erfindung liegt das Problem zugrunde, eine Vorrichtung zum spanenden Bearbeiten von Werkstücken bereitzustellen, welche die Nachteile des Standes der Technik überwindet und insbesondere eine verbesserte Spankontrolle gewährleistet und gleichzeitig eine hohe Bruchsicherheit und Standzeit aufweist und kostengünstig herstellbar ist.

Das Problem ist durch die im Anspruch 1 bestimmte Vorrichtung gelöst. Besondere Ausführungsarten der Erfindung sind in den Unteransprüchen bestimmt.

Dadurch dass die Spanformfläche in einer sich von der vorderen Schneidkante wegweisend erstreckenden Längsrichtung mindestens abschnittsweise konvex ist, ist die Spankontrolle verbessert bei gleichzeitig erhöhter Bruchfestigkeit insbesondere im Bereich der Schneiden. Die Spanformeinrichtung weist zwei voneinander beabstandete und im Wesentlichen parallel verlaufende Stege auf, zwischen denen die Spanformfläche angeordnet ist. Die Spanformfläche ist vorzugsweise in Längsrichtung in einem der vorderen Schneidkante nahen ersten Abschnitt konvex gekrümmt, wogegen sie in einem der vorderen Schneidkante entfernten zweiten Abschnitt ebenfalls konvex oder plan ausgebildet sein kann. Quer zu ihrer Längserstreckung ist die Spanformfläche vorzugsweise plan oder ebenfalls konvex ausgebildet.

Die Spanformfläche vereinigt sich an ihrem der vorderen Schneidkante zugewandten Ende mit der vorderen Räumfläche vorzugsweise ohne Ausbildung einer Kante an der Vereinigungslinie. Ausgehend von dieser Vereinigungslinie, die gleichzeitig den tiefsten Punkt der Spanformfläche bildet, steigt die Höhe der Spanformfläche in einer von der vorderen Schneidkante wegweisenden Richtung an, um an ihrem im Wesentlichen mit dem Ende der sie begrenzenden Stege zusammenfallenden Ende die Höhe der durch die Schneidkanten gebildeten Ebene zu erreichen. Ausgehend von der Vereinigungslinie verbreitert sich die Spanformfläche in der ersten Hälfte ihrer Längserstreckung, um anschließend im Wesentlichen eine konstante Breite aufzuweisen.

Das Bearbeitungsteil ist vorzugsweise endseitig an dem Grundteil angeordnet, und/oder einstückig mit diesem ausgebildet. Bei der Vorrichtung kann es sich um einen Wendeschneideinsatz handeln, der an einem gemeinsamen Grundteil mehrere und insbesondere an dessen entgegengesetzten Enden zwei Bearbeitungsteile aufweist. Das Wenden kann dabei um eine quer zur Längsrichtung des Grundteils ausgerichtete Achse um 180° erfolgen. Die Vorrichtung besteht vorzugsweise aus einem gesinterten und gehärteten Werkstoff, der darüber hinaus eine Oberflächenschicht aufweisen kann, die entweder durch eine oberflächennahe Umwandlung des Sintermaterials herstellbar ist oder mit bekannten Verfahren auftragbar ist, beispielsweise durch die Auftragung von Titannitrid (TiN) mittels Kathodenzerstäubung oder Abscheidung aus der Gasphase (Chemical Vapor Deposition, CVD).

Dadurch, dass die auf einer Oberfläche des Bearbeitungsteils angeordnete Spanformeinrichtung neben dem Steg eine Noppe mit konvex gekrümmter Oberfläche aufweist, die benachbart zu der von der vorderen und der seitlichen Schneidkante gebildeten Ecke angeordnet ist, ist die Spankontrolle weiter verbessert bei gleichzeitig erhöhter Bruchfestigkeit insbesondere im Bereich der Schneiden aufgrund der Form und/oder Anordnung der Noppe. Der Steg ist langgestreckt und weist vorzugsweise im Wesentlichen geradlinige Längsseiten auf. Die Noppe bewirkt beispielsweise eine erwünschte Spanverjüngung, wobei der Span in den Randbereichen stärker umgeformt wird als in der Mitte. Dadurch ist ein quer zur Einstechrichtung schmalerer Span erreichbar. Auch durch die vorzugsweise Anordnung von zwei Stegen mit jeweils zugehörigen Noppen ist eine weitere Stabilisierung der Schneiden als auch eine verbesserte Spanumformung beim Längsdrehen erreicht. Vorzugsweise geht der Steg ohne Ausbildung einer Kante in die Noppe über. Die konvexe Krümmung ist insbesondere in einer oder mehreren Richtung konstant.

Vorzugsweise liegen die vordere und die eine oder mehreren seitlichen Schneidkanten in einer Ebene und jedenfalls Teile der Spanformeinrichtung ragen über diese Ebene hinaus. Die vordere und die eine oder mehreren seitlichen Schneidkanten schließen jeweils annähernd einen rechten Winkel ein, vorzugsweise im Bereich zwischen 84 und 88°, insbesondere 86°. Der Steg der Spanformeinrichtung verläuft im wesentlichen parallel zur zugeordneten seitlichen Schneidkante, schließt mit deren Längsrichtung aber vorzugsweise einen spitzen Winkel von weniger als 10° ein, insbesondere etwa 4°.

Die Noppe ist in Bezug auf die Längserstreckung des Steges nach außen in Richtung der zugeordneten Ecke versetzt angeordnet. Insbesondere schließt die verlängerte Verbindungslinie zwischen der zugeordneten Ecke und der Noppe mit der Längsrichtung des Steges einen Winkel zwischen 30 und 60°, insbesondere 45°, ein. Die Noppe ist zwischen dem der vorderen Schneidkante zugewandten Ende des Steges und der Ecke angeordnet. Dadurch ist insbesondere die Bruchfestigkeit im Eckenbereich deutlich erhöht und die Spankontrolle verbessert. Alternativ oder ergänzend ist auch ein Versatz der bzw. einer weiteren Noppe nach innen möglich.

Die konvex gekrümmte Oberfläche der Noppe kann die Form eines Teilellipsoids oder einer Teilkugel aufweisen. Vorzugsweise ist die Noppe durch ein Kugelsegment, beispielsweise ein Drittelsegment bis ein Fünftelsegment gebildet und insbesondere in Richtung auf die zugeordnete Ecke als Kugelsegment ausgebildet, wogegen in Richtung auf den zugeordneten Steg annähernd die Hälfte des Kugelsegments sich mit dem Steg vereinigt. Die maximale Höhe der Noppe kann oberhalb einer von den Schneidkanten gebildeten Ebene liegen, aber vorzugsweise unterhalb der maximalen Höhe des Steges.

Der Steg weist eine abgeflachte und im Wesentlichen plane Oberfläche auf, die oberhalb einer von der vorderen und den seitlichen Schneidkanten gebildeten Ebene liegt. Der Steg ist vorzugsweise und mit Ausnahme der Grenzfläche zu der angrenzenden Noppe im Wesentlichen in Form eines Pyramidenstumpfes ausgebildet. Insbesondere weist der Steg an seinem der vorderen Schneidkante abgewandten Ende eine konvexe oder plan abfallende Schrägfläche bis auf eine Höhe der durch die Schneidkanten gebildeten Ebene auf.

Der Steg weist eine innere und eine der zugehörigen seitlichen Schneidkante zugeordnete äußere Seitenflanke auf, wobei zur verbesserten Spankontrolle sowohl beim Einstechen als auch beim Längsdrehen die äußere Seitenflanke plan oder konvex ist und die innere Seitenflanke plan oder konkav ist.

Der Steg weist an seinem der vorderen Schneidkante zugewandten Ende neben der Noppe eine schräg nach innen gerichtete Vorderflanke auf, wobei die Längsausrichtung dieser Vorderflanke mit der Verbindungslinie zwischen der Ecke und der Noppe einen annähernd rechten Winkel einschließt. Die Vorderflanke ist dabei zur verbesserten Spankontrolle plan oder konvex und geht unter Bildung jeweils einer Kante in die plane Oberfläche des Steges bzw. dessen innere Seitenflanke über.

Zwischen der Spanformeinrichtung und der vorderen und seitlichen Schneidkante ist eine umlaufende Spanrille angeordnet, die in Richtung der vorderen und seitlichen Schneidkanten eine vordere bzw. seitliche konkave Räumflächen aufweist. Die Krümmung der konkaven Räumflächen nimmt mit dem Abstand von der Schneidkante ab und die seitlichen konkaven Räumflächen gehen unter Bildung einer die jeweils tiefste Stelle der Spanrille definierenden Kante in die äußere Seitenflanke des zugehörigen Steges über.

In der Spanrille sind schräg und insbesondere quer, d.h. rechtwinklig, zu deren Erstreckung verlaufende Stabilisierungsstege angeordnet, durch die ein Ausbrechen der Schneidkante zuverlässig verhindert ist. Außerdem wird dadurch im Teilschnittbereich sowie bei der Längsbearbeitung der Span kontrolliert derart verformt, dass kurze Spanstücke erzeugbar sind.

Die Stabilisierungsstege sind vorzugsweise wulstförmig, wobei die Kammhöhe ausgehend von der Schneidkante im weiteren Verlauf abnimmt und vorzugsweise geringer ist als die Höhe der Schneidkante. Die Stabilisierungsstege verbinden insbesondere die seitlichen konkaven Räumflächen mit den äußeren Seitenflanken der zugehörigen Stege der Spanformeinrichtung.

Der Übergang zwischen Steg und Noppe ist durch eine einen vorderen mit einem seitlichen Abschnitt der Spanrille verbindende Übergangsrille mit konkavem Querschnitt gebildet, die in Längsrichtung in Bezug auf die benachbarten Schneidkanten konvex gekrümmt, d. h. von der Noppe wegweisend und in Richtung des Steges gekrümmt, verläuft oder geradlinig verläuft. Die Sohle der Übergangsrille liegt im höchsten Punkt vorzugsweise noch unterhalb der höchsten Erhebung der Noppe. Endseitig verbindet sich die Sohle der Übergangsrille mit der vorderen bzw. der seitlichen Räumfläche.

Weitere Vorteile, Merkmale und Einzelheiten der Erfindung ergeben sich aus den Unteransprüchen sowie der nachfolgenden Beschreibung, in der unter Bezugnahme auf die Zeichnungen ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt eine Seitensicht einer erfindungsgemäßen Vorrichtung,
- Fig. 2: zeigt eine perspektivische Ansicht eines Ausschnitts des Bearbeitungsteils,
- Fig. 3: zeigt eine Draufsicht auf das Bearbeitungsteil der Fig. 2,
- Fig. 4: zeigt einen Schnitt entlang IV-IV in der Fig. 3,
- Fig. 5: zeigt einen Schnitt entlang V-V in der Fig. 3,
- Fig. 6: zeigt einen Schnitt entlang VI-VI in der Fig. 3,
- Fig. 7: zeigt einen Schnitt entlang VII-VII in der Fig. 3,
- Fig. 8: zeigt einen Schnitt entlang VIII-VIII in der Fig. 3, und
- Fig. 9: zeigt einen Schnitt entlang IX-IX in der Fig. 3.

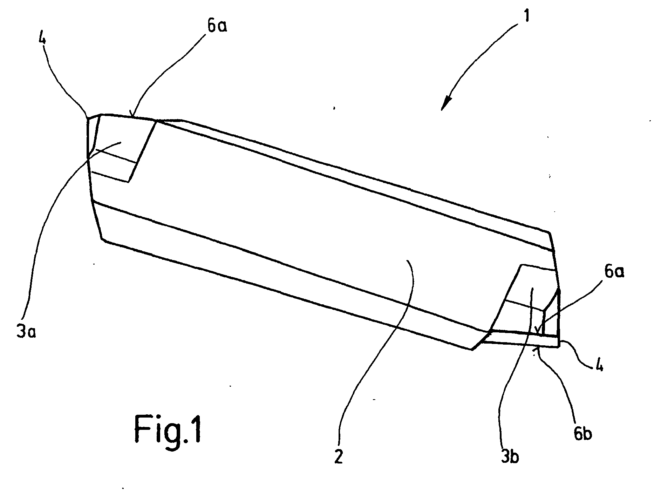

Die Fig. 1 zeigt eine Seitensicht einer erfindungsgemäßen Vorrichtung zum spanenden Bearbeiten von Werkstücken, insbesondere einen Metallschneideeinsatz 1, mit einem Grundteil 2 zum Festlegen der Vorrichtung in einer Halteeinrichtung und zwei jeweils endseitig an dem Grundteil 2 angeordneten und einstückig mit diesem ausgebildeten Bearbeitungsteilen 3a, 3b, die identisch ausgestaltet sind und von denen in den nachfolgenden Figuren beispielhaft nur das Bearbeitungsteil 3a beschrieben ist. Der gesamte Metallschneideeinsatz 1 ist punktsymmetrisch zu einem im Zentrum des Grundteils 2 liegenden Symmetriepunkts ausgebildet. Das Grundteil 2 weist planparallele Seitenflächen sowie trapezförmige Ober- und Unterseiten auf, die über schräg zur Längsrichtung des Grundteils 2 verlaufende Fasen mit den Seitenflächen verbunden sind. Die Festlegung des Wendeschneideeinsatz 1 in einer Halteeinrichtung, wie sie aus dem Stand der Technik bekannt ist, erfolgt beispielsweise über lösbares Klemmen des Grundteils 2 in der Halteeinrichtung.

Die Fig. 2 zeigt eine perspektivische Ansicht eines Ausschnitts des Bearbeitungsteils 3a des Metallschneideeinsatzes 1 der Fig. 1. Das Bearbeitungsteil 3a weist eine vordere Schneidkante 4 und zwei sich daran unter Bildung jeweils einer Ecke 5a, 5b anschließende seitliche Schneidkanten 6a, 6b auf. Das Bearbeitungsteil 3a ist symmetrisch bezüglich einer durch die gestrichelte Linie 7 angedeuteten Symmetrieebene, weshalb nachfolgend im Wesentlichen nur noch die eine Hälfte des in der Fig. 2 dargestellten Bearbeitungsteils 3a beschrieben ist. Im Bereich zwischen der vorderen Schneidkante 4 und den seitlichen Schneidkanten 6a, 6b ist eine Spanformeinrichtung angeordnet, die mindestens einen sich im Wesentlichen parallel zur seitlichen Schneidkante 6a erstreckenden Steg 8a aufweist. Weiterhin ist eine Noppe 9 angeordnet mit konvex gekrümmter und insbesondere teilkugelförmiger Oberfläche, die benachbart zu der von der vorderen Schneidkante 4 und der seitlichen Schneidkante 6a gebildeten Ecke 5a angeordnet ist.

Die Fig. 3 zeigt eine Draufsicht auf das Bearbeitungsteil 3a der Fig. 2. Die Noppe 9 ist in Bezug auf die Längserstreckung des Steges 8a, die in der Darstellung der Fig. 3 im Wesentlichen von oben nach unten verläuft, nach außen in Richtung der zugeordneten Ecke 5a versetzt angeordnet. Die Verbindungslinie der Ecke 5a mit der höchsten Erhebung der Noppe 9 schließt mit der Längserstreckung des Steges 3a in diesem Ausführungsbeispiel einen Winkel von etwa 45° ein. Der Steg 8a weist eine innere Seitenflanke 10 und eine der zugehörigen seitlichen Schneidkante 6a zugeordnete äußere Seitenflanke 11 auf. An seinem der vorderen Schneidkante 4 zugewandten Ende weist der Steg 8a neben der Noppe 9 eine schräg nach innen gerichtete Vorderflanke 12 auf, die im Wesentlichen plan oder konvex ist. Zwischen der Spanformeinrichtung und der vorderen Schneidkante 4 und den seitlichen Schneidkanten 6a, 6b ist eine durchgehend umlaufende Spanrille angeordnet, die einen vorderen Abschnitt 13a sowie sich daran anschließende seitliche Abschnitte 13b umfasst.

Zwischen den beiden voneinander beabstandeten, nicht unmittelbar miteinander verbundenen und im Wesentlichen geradlinige innere Längsseiten aufweisenden sowie im Wesentlichen parallel verlaufenden Stegen 8a, 8b ist eine in Richtung von der vorderen Schneidkante 4 wegweisend sich erstreckende plane oder konvexe Spanformfläche 14 angeordnet. Diese ist in einem der vorderen Schneidkante 4 nahen ersten Abschnitt 14a konvex und in einem sich daran anschließenden und der vorderen Schneidkante 4 entfernten zweiten Abschnitt 14b im Wesentlichen plan. Quer zu ihrer Längserstreckung entsprechend der Richtung des Pfeils 15 ist die Spanformfläche 14 plan. Im ersten Abschnitt 14a verbreitert sich die Spanformfläche 14 entlang ihrer Längserstreckung um etwa 25 %, während sie im zweiten Abschnitt 14b in ihrer Breite im Wesentlichen unverändert bleibt.

Im vorderen Abschnitt 13a der Spanrille sind quer zu deren Verlauf ausgerichtete vordere Stabilisierungsstege 16a angeordnet, welche eine die Spanrille bildende vordere konkave Räumfläche 17a mit dem ersten Abschnitt 14a der Spanformeinrichtung 14 verbinden. Im seitlichen Abschnitt 13b der Spanrille sind quer zu deren Längserstreckung seitliche Stabilisierungsstege 16b angeordnet, welche die Spanrille bildende seitliche konkave Räumflächen 17b mit der jeweils zugeordneten äußeren Seitenflanke 11 des zugehörigen Steges 8a verbinden.

Der Spanrillengrund 18 wird an dem von der vorderen Schneidkante 4 abgewandten Ende des seitlichen Abschnitts 13b der Spanrille durch die schräge Anstiegsfläche 19 begrenzt, welche bis auf eine Höhe der durch die Schneidkanten 4, 6a, 6b gebildeten Ebene hinaufführt. Der Steg 8a weist an seinem der vorderen Schneidkante 4 abgewandten Ende eine konvexe oder plan abfallende Schrägfläche 20 bis auf die Höhe der durch die Schneidkanten 4, 6a, 6b gebildeten Ebene auf.

Die vordere Schneidkante 4 und die seitlichen Schneidkanten 6a, 6b sind durch die Schnittkante der Vorder- bzw. Seitenflächen des Bearbeitungsteils 3a mit einer durchgehend verlaufenden Schneidstegfläche 21 gebildet, die vorzugsweise plan verläuft und eine über ihre gesamte Länge im Wesentlichen annähernd konstante Breite aufweist.

Der Übergang zwischen dem Steg 8a und der Noppe 9 ist durch eine Übergangsrille 22 mit konkavem Querschnitt gebildet, die den vorderen Abschnitt 13a mit dem seitlichen Abschnitt 13b der Spanrille verbindet.

Die Fig. 4 zeigt einen Schnitt quer zur Längsrichtung 15 entlang IV-IV in der Fig. 3. Die insgesamt drei symmetrisch zur Mittelebene angeordneten und wulstförmigen vorderen Stabilisierungsstege 16a verlaufen senkrecht zur Zeichenebene. Die Noppe 9 ist teilweise im Querschnitt, im Wesentlichen jedoch in der Ansicht dargestellt. Die erste Schnittlinie 23 verläuft im Bereich der vorderen konkaven Raumfläche 17a der Spanrille. In der Ansicht ist die vom Steg 8a ausgebildete Vorderflanke 12 dargestellt. Diese geht in die ebenfalls in der Ansicht dargestellte Übergangsrille 22 über, die den im Wesentlichen kantenlosen Übergang zwischen dem Steg 8a und der Noppe 9 bildet.

Die Fig. 5 zeigt einen weiter von der vorderen Schneidkante 4 zurückversetzten Schnitt durch das Bearbeitungsteil 3a entlang V-V in der Fig. 3. Die zweite Schnittlinie 24 liegt dabei im ersten Abschnitt 14a der Spanformfläche 14. Sie geht an beiden Enden in die leicht konkav geformte innere Seitenflanke 10 der Stege 8a, 8b über, die ihrerseits unter Bildung einer senkrecht zur Zeichenebene verlaufenden Kante 26 in die im Wesentlichen plane Oberfläche 27 übergeht. An die plane Oberfläche 27 schließt sich unter Bildung einer senkrecht zur Zeichenebene verlaufenden weiteren Kante 28 die konvex geformte äußere Seitenflanke 11 des Steges 8a an, die bis zum Spanrillengrund 18 abfällt. An den Spanrillengrund 18 schließt sich in Richtung der seitlichen Schneidkante 6a die seitliche konkave Räumfläche 17b an. Während der Spanrillengrund 18 kantenlos in die seitliche konkave Räumfläche 17b übergeht, ist am Übergang zwischen dem Spanrillengrund 18 und der äußeren Seitenflanke 11 eine senkrecht zur Zeichenebene verlaufende Übergangskante gebildet.

Die Fig. 6 zeigt einen noch weiter von der vorderen Schneidkante 4 zurück versetzten Schnitt entlang VI-VI in der Fig. 3. Die dritte Schnittlinie 25 liegt dabei nahe dem Ende des ersten Abschnitts 14a der Spanformfläche 14 und demzufolge auf einer Höhe, die annähernd in der durch die seitlichen Schneidkanten 6a, 6b gebildeten Ebene liegt. Die innere Seitenflanke 10 des Stegs 8a ist in diesem Bereich annähernd plan oder nur noch ganz gering konkav. Dagegen ist die äußere Seitenflanke 11 in diesem Bereich konvex ausgebildet. Der seitliche Stabilisierungssteg 16b ist im Querschnitt dargestellt, wobei dessen Kammhöhe 16c ausgehend von der seitlichen Schneidkante 6a kontinuierlich abnimmt und jedenfalls geringer ist als die Höhe der seitlichen Schneidkante 6a. In der Ansicht ist bereits die die Spanrille abschließende schräge Anstiegsfläche 19 ersichtlich, welche die selbe Höhe aufweist wie die durch die seitlichen Schneidkanten 6a, 6b gebildete Ebene.

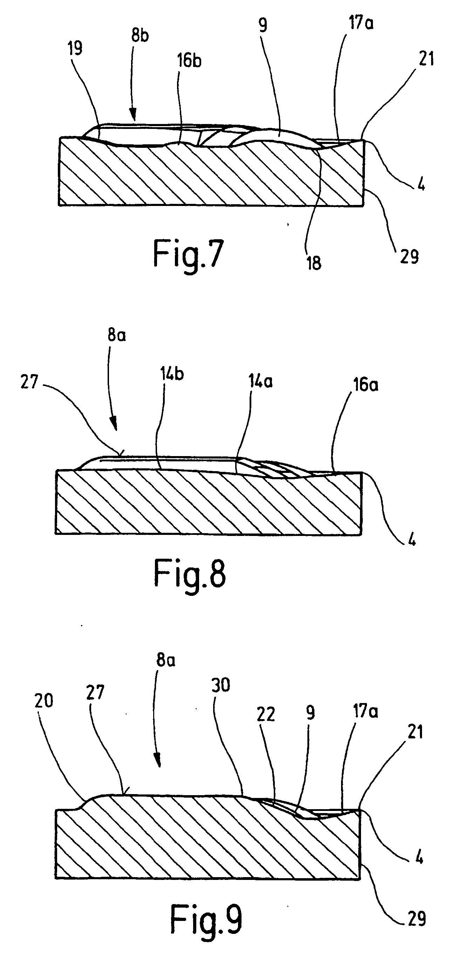

Die Fig. 7 zeigt einen Schnitt parallel zur Längsrichtung 15 im Bereich des seitlichen Abschnitts 13b der Spanrille entlang VII-VII in der Fig. 3. Ausgehend von der Schneidstegfläche 21, die zusammen mit der vorderen Seitenfläche 29 die vordere Schneidkante 4 bildet, schließt sich die vordere konkave Räumfläche 17a an, die bis zum Spanrillengrund 18 abfällt. Anschließend verläuft der Schnitt durch die Noppe 9, weiter im Spanrillengrund 18, durch den wulstförmigen und senkrecht zur Zeichenebene der Fig. 7 verlaufenden seitlichen Stabilisierungssteg 16b, wiederum im Spanrillengrund 18 und anschließend über die schräge Anstiegsfläche 19 bis auf eine Höhe, die in der durch die vordere und die seitlichen Schneidkanten 4, 6a, 6b gebildeten Ebene liegt. Der Steg 8b ist in der Ansicht dargestellt, aus der der im Wesentlichen plane Verlauf seiner Oberfläche ersichtlich ist.

Die Fig. 8 zeigt einen Schnitt durch die Mittelebene entlang VIII-VIII in der Fig. 3. Ausgehend von der vorderen Schneidkante 4 verläuft der Schnitt durch den vorderen Stabilisierungssteg 16a, dessen Kammhöhe ausgehend von der vorderen Schneidkante 4 kontinuierlich abnimmt und jedenfalls geringer ist als die Höhe der vorderen Schneidkante 4. Anschließend verläuft der Schnitt im ersten Abschnitt 14a der Spanformfläche 14, die gering konvex ist. Ohne Ausbildung einer Kante schließt sich an den ersten Abschnitt 14a der zweite Abschnitt 14b an, der im Wesentlichen plan ist und nur eine geringe oder gar keine Steigung aufweist. Der in der Ansicht dargestellte Steg 8a weist ebenfalls eine plane und nahezu horizontal verlaufende Oberfläche 27 auf.

Die Fig. 9 zeigt einen Schnitt entlang IX-IX in der Fig. 3 durch den Steg 8a. Ausgehend von der vorderen Schneidkante 4, der Schneidstegfläche 21 und der vorderen konkaven Räumfläche 17a verläuft der Schnitt ein Stück weit durch die in ihrem Querschnitt konkave Übergangsrille 22, um anschließend unter Bilden der weiteren Übergangskante 30 in die plane Oberfläche 27 des Stegs 8a zu münden. An dem von der vorderen Schneidkante 4 entfernten Ende fällt der Steg 8a über die konvexe Schrägfläche 20 bis auf eine der Schneidstegfläche 21 entsprechende Höhe ab.

## Patentansprüche

1. Vorrichtung zum spanenden Bearbeiten von Werkstücken, insbesondere Metallschneideeinsatz (1), mit einem Grundteil (2) zum Festlegen der Vorrichtung in einer Halteeinrichtung und einem Bearbeitungsteil (3a, 3b), wobei das Bearbeitungsteil (3a, 3b) eine vordere Schneidkante (4) und mindestens eine sich daran unter Bildung einer Ecke (5a, 5b) anschließende seitliche Schneidkante (6a, 6b) sowie eine im Bereich zwischen der vorderen und der seitlichen Schneidkante (4, 6a, 6b) angeordnete Spanformeinrichtung aufweist, die zwei voneinander beabstandete, im Wesentlichen parallel verlaufende und sich in Richtung der seitlichen Schneidkante (4) erstreckende Stege (8a, 8b) aufweist, und wobei zwischen den Stegen (8a, 8b) eine Spanformfläche (14) angeordnet ist, **dadurch gekennzeichnet, dass** die Spanformfläche (14) in einer sich von der vorderen Schneidkante (4) wegweisend erstreckenden Längsrichtung (15) mindestens abschnittsweise konvex ist.

2. Vorrichtung nach Anspruch 1, **dadurch gekennzeichnet, dass** die Spanformfläche (14) in einem der vorderen Schneidkante (4) nahen ersten Abschnitt (14a) in Längsrichtung (15) konvex ist.

3. Vorrichtung nach Anspruch 1 oder 2, **dadurch gekennzeichnet, dass** die Spanformfläche (14) in einem der vorderen Schneidkante (4) entfernten zweiten Abschnitt (14b) in Längsrichtung (15) plan ist.

4. Vorrichtung nach einem der Ansprüche 1 bis 3, **dadurch gekennzeichnet, dass** die Spanformfläche (14) in Querrichtung plan ist.

5. Vorrichtung nach einem der Ansprüche 1 bis 4, **dadurch gekennzeichnet, dass** die Spanformfläche (14) nicht über eine von der vorderen und der seitlichen Schneidkante (4, 6a, 6b) gebildete Ebene hinausragt.

6. Vorrichtung nach einem der Ansprüche 1 bis 5, **dadurch gekennzeichnet, dass** die Spanformeinrichtung weiterhin eine Noppe (9) mit konvex gekrümmter Oberfläche aufweist, die benachbart zu der von der vorderen und der seitlichen Schneidkante (4, 6a, 6b) gebildeten Ecke (5a, 5b) angeordnet ist.

7. Vorrichtung nach Anspruch 6, **dadurch gekennzeichnet, dass** die Noppe (9) in Bezug auf die Längserstreckung (15) des Steges (8a, 8b) nach außen in Richtung der zugeordneten Ecke (5a, 5b) versetzt angeordnet ist.

8. Vorrichtung nach Anspruch 6 oder 7, **dadurch gekennzeichnet, dass** die konvex gekrümmte Oberfläche der Noppe (9) die Form eines Teilellipsoids oder einer Teilkugel aufweist.

9. Vorrichtung nach einem der Ansprüche 6 bis 8, **dadurch gekennzeichnet, dass** die maximale Höhe der Noppe (9) oberhalb einer von der vorderen und der seitlichen Schneidkante (4, 6a, 6b) gebildeten Ebene, aber unterhalb der maximalen Höhe des Steges (8a, 8b) liegt.

10. Vorrichtung nach einem der Ansprüche 1 bis 9, **dadurch gekennzeichnet, dass** der Steg (8a, 8b) eine abgeflachte und im Wesentlichen plane Oberfläche (27) aufweist, die oberhalb der von der vorderen und der seitlichen Schneidkante (4, 6a, 6b) gebildeten Ebene liegt.

11. Vorrichtung nach einem der Ansprüche 1 bis 10, **dadurch gekennzeichnet, dass** der Steg (8a, 8b) eine innere (10) und eine der zugehörigen seitlichen Schneidkante (6a, 6b) zugeordnete äußere (11) Seitenflanke aufweist, dass die äußere Seitenflanke (11) plan oder konvex ist und dass die innere Seitenflanke (10) plan oder konkav ist.

12. Vorrichtung nach einem der Ansprüche 6 bis 11, **dadurch gekennzeichnet, dass** der Steg (8a, 8b) an seinem der vorderen Schneidkante (4) zugewandten Ende neben der Noppe (9) eine schräg nach innen gerichtete Vorderflanke (12) aufweist.

13. Vorrichtung nach Anspruch 12, **dadurch gekennzeichnet, dass** die Vorderflanke (12) plan oder konvex ist.

14. Vorrichtung nach einem der Ansprüche 1 bis 13, **dadurch gekennzeichnet, dass** zwischen der Spanformeinrichtung und der vorderen und seitlichen Schneidkante (4, 6a, 6b) eine umlaufende Spanrille angeordnet ist.

15. Vorrichtung nach Anspruch 14, **dadurch gekennzeichnet, dass** die Spanrille in Richtung der Schneidkanten (4, 6a, 6b) vordere und seitliche konkave Räumflächen (17a, 17b) aufweist.

16. Vorrichtung nach Anspruch 14 oder 15, **dadurch gekennzeichnet, dass** in der Spanrille schräg und insbesondere quer zu deren Erstreckung verlaufende Stabilisierungsstege (16a, 16b) angeordnet sind.

17. Vorrichtung nach Anspruch 16, **dadurch gekennzeichnet, dass** die Stabilisierungsstege (16a, 16b) wulstförmig sind und dass die Kammhöhe (16c) der Stabilisierungsstege (16a, 16b) ausgehend von der Schneidkante (4, 6a, 6b) im weiteren Verlauf abnimmt und geringer ist als die Höhe der Schneidkante (4, 6a, 6b).

18. Vorrichtung nach einem der Ansprüche 14 bis 17, **dadurch gekennzeichnet, dass** ein Übergang zwischen Steg (8a, 8b) und Noppen (9) durch eine Übergangsrille (22) mit konkavem Querschnitt gebildet ist, die einen vorderen (14a) mit einem seitlichen (14b) Abschnitt der Spanrille verbindet.

19. Vorrichtung nach Anspruch 18, **dadurch gekennzeichnet, dass** die Übergangsrille (22) in Längsrichtung in Bezug auf eine benachbarte Schneidkante (4, 6a, 6b) konvex oder geradlinig verläuft.

## Claims

1. Means for the processing of work pieces by machining operation, especially a metal-cutting insert (1), with a base part (2) for affixing the means within a holding means and a processing part (3a, 3b), whereby the processing part (3a, 3b) comprises a front cutting edge (4) and at least one following side cutting edge (6a, 6b) joining on said front cutting edge (4) thus forming a corner (5a, 5b), as well as a chip forming means located within the area between the front and the side cutting edge (4, 6a, 6b), said chip performing means comprising two substantially parallel lands (8a, 8b) spaced apart from each other and extending in the direction of the side cutting edge (4), and whereby a chip shaping surface (14) is located between the lands (8a, 8b), **characterised in that** the chip shaping surface (14) extending in a longitudinal direction (15) facing away from the front cutting edge (4) is at least sectionally convex.

2. Means according to Claim 1, **characterised in that** the chip shaping surface (14) is convex in a longitudinal direction (15) within a first section (14a) adjacent to the front cutting edge (4).

3. Means according to Claim 1 or 2, **characterised in that** the chip shaping surface (14) is planar in a longitudinal direction (15) within a second section (14b) spaced apart from the front cutting edge (4).

4. Means according to one of the Claims 1 to 3, **characterised in that** the chip shaping surface (14) is planar in a traverse direction.

5. Means according to one of the Claims 1 to 4, **characterised in that** the chip shaping surface (14) does not project over a plane formed by the front and side cutting edges (4, 6a, 6b).

6. Means according to one of the Claims 1 to 5, **characterised in that** the chip shaping means further incorporates a nipple (9) with a convexly curved surface, which is located adjacent to the corner (5a, 5b) formed by the front and side cutting edges (4, 6a, 6b).

7. Means according to Claim 6, **characterised in that** the nipple (9) is positioned offset towards the outside in the direction of the associated corner (5a, 5b) in relation to the longitudinal extension (15) of the land (8a, 8b).

8. Means according to Claim 6 or 7, **characterised in that** the convexly curved surface of the nipple (9) shows the shape of a partial ellipsoid or a partial sphere.

9. Means according to one of the Claims 6 to 8, **characterised in that** the maximum height of the nipple (9) lies above a plane formed by the front and side cutting edges (4, 6a, 6b), but below the maximum height of the land (8a, 8b).

10. Means according to one of the Claims 1 to 9, **characterised in that** the land (8a, 8b) comprises a flattened and substantially planar surface (27), which lies above the plane formed by the front and side cutting edges (4, 6a, 6b).

11. Means according to one of the Claims 1 to 10, **characterised in that** the land (8a, 8b) comprises ah inner (10) side flank and an outer (11) side flank associated to the corresponding side cutting edge (6a, 6b) and **in that** the outer side flank (11) is planar or convex and **in that** the inner side flank (10) is planar or concave.

12. Means according to one of the Claims 6 to 11, **characterised in that** the land (8a, 8b) at its end facing the front cutting edge (4) and next to the nipple (9) comprises a front flank (12) which is directed diagonally inwards.

13. Means according to Claim 12, **characterised in that** the front flank (12) is planar or convex.

14. Means according to one of the Claims 1 to 13, **characterised in that** a circumferential chip groove is located between the chip shaping means and the front and side cutting edges (4, 6a, 6b).

15. Means according to Claim 14, **characterised in that** the chip groove incorporates front and side concave clearing surfaces (17, 17b) in the direction of the cutting edges (4, 6a, 6b).

16. Means according to Claim 14 or 15, **characterised in that** stabilising lands (16a, 16b) are located in the chip groove and running diagonally and in particular transversely to the extension of the chip groove.

17. Means according to Claim 16, **characterised in that** the stabilising lands (16a, 16b) are bead-shaped, and **in that** the ridge height of the stabilising lands (16a, 16b) beginning at the cutting edge (4, 6a, 6b) decreases along the further course and is smaller than the height of the cutting edge (4, 6a, 6b).

18. Means according to one of the Claims 14 to 17, **characterised in that** a transition between land (8a, 8b) and nipple (9) is formed by a transition groove (22) with a concave cross-section which connects a front (14a) section of the chip groove with a side (14b) section of the same.

19. Means according to Claim 18, **characterised in that** the transition groove (22) extends convex or straight in a longitudinal direction in relation to an adjacent cutting edge (4, 6a, 6b).

## Revendications

1. Dispositif pour l'usinage de pièces par enlèvement de copeaux, notamment plaquette de coupe (1) pour l'usinage de métaux, comprenant une partie de base (2) pour fixer ledit dispositif dans un dispositif de support, et une partie d'usinage (3a, 3b), la partie d'usinage (3a, 3b) présentant une arête de coupe avant (4) et, s'y raccordant en formant un coin (5a, 5b), au moins une arête de coupe latérale (6a, 6b), ainsi qu'un dispositif de formage du copeau agencé dans la zone entre l'arête de coupe avant et l'arête de coupe latérale (4, 6a, 6b), qui présente deux nervures (8a, 8b) espacées l'une de l'autre, s'étendant sensiblement parallèlement l'une à l'autre et dans la direction de l'arête de coupe latérale (6a, 6b), et une surface (14) de formage du copeau étant agencée entre les nervures (8a, 8b), **caractérisé en ce que** la surface (14) de formage du copeaux est convexe, au moins par tronçons, dans une direction longitudinale (15) qui s'étend de manière à s'éloigner de l'arête de coupe avant (4).

2. Dispositif selon la revendication 1, **caractérisé en ce que** la surface (14) de formage du copeau est convexe en direction longitudinale (15), dans un premier tronçon (14a) proche de l'arête de coupe avant (4).

3. Dispositif selon la revendication 1 ou 2, **caractérisé en ce que** la surface (14) de formage du copeau est plane en direction longitudinale (15), dans un second tronçon (14b) éloigné de l'arête de coupe avant (4).

4. Dispositif selon l'une des revendications 1 à 3, **caractérisé en ce que** la surface (14) de formage du copeau est plane en direction transversale.

5. Dispositif selon l'une des revendications 1 à 4, **caractérisé en ce que** la surface (14) de formage du copeau ne dépasse pas d'un plan formé par l'arête de coupe avant et l'arête de coupe latérale (4, 6a, 6b).

6. Dispositif selon l'une des revendications 1 à 5, **caractérisé en ce que** le dispositif de formage du copeau comprend par ailleurs, une protubérance (9) à surface de courbure convexe, qui est agencée au voisinage du coin (5a, 5b) formé par l'arête de coupe avant et l'arête de coupe latérale (4, 6a, 6b).

7. Dispositif selon la revendication 6, **caractérisé en ce que** la protubérance (9) est agencée, par rapport à l'étendue longitudinale (15) de la nervure (8a, 8b), de manière décalée vers l'extérieur en direction du coin (5a, 5b) associé.

8. Dispositif selon la revendication 6 ou 7, **caractérisé en ce que** la surface de courbure convexe de la protubérance (9) présente la forme d'un ellipsoïde partiel ou d'une sphère partielle.

9. Dispositif selon l'une des revendications 6 à 8, **caractérisé en ce que** la hauteur maximale de la protubérance (9) se situe au-dessus d'un plan formé par l'arête de coupe avant et l'arête de coupe latérale (4, 6a, 6b), mais en-dessous de la hauteur maximale de la nervure (8a, 8b).

10. Dispositif selon l'une des revendications 1 à 9, **caractérisé en ce que** la nervure (8a, 8b) présente une surface supérieure (27) aplatie et sensiblement plane, qui se situe au-dessus du plan formé par l'arête de coupe avant et l'arête de coupe latérale (4, 6a, 6b).

11. Dispositif selon l'une des revendications 1 à 10, **caractérisé en ce que** la nervure (8a, 8b) présente un flanc latéral intérieur (10) et un flanc latéral extérieur (11) associé à l'arête de coupe (6a, 6b) latérale correspondante, **en ce que** le flanc latéral extérieur (11) est plan ou convexe, et **en ce que** le flanc latéral intérieur (10) est plan ou concave.

12. Dispositif selon l'une des revendications 6 à 11, **caractérisé en ce que** la nervure (8a, 8b) présente à son extrémité dirigée vers l'arête de coupe avant (4), à côté de la protubérance (9), un flanc avant (12) dirigé obliquement vers l'intérieur.

13. Dispositif selon la revendication 12, **caractérisé en ce que** ledit flanc avant (12) est plan ou convexe.

14. Dispositif selon l'une des revendications 1 à 13, **caractérisé en ce qu'**entre le dispositif de formage du copeau et l'arête de coupe avant et latérale (4, 6a, 6b) est agencée une goujure à copeau périphérique.

15. Dispositif selon la revendication 14, **caractérisé en ce que** la goujure à copeau présente, en direction des arêtes de coupe (4, 6a, 6b), des surfaces de débourrage concaves (17a, 17b) avant et latérales.

16. Dispositif selon la revendication 14 ou 15, **caractérisé en ce que** dans la goujure à copeau sont agencées des nervures de stabilisation (16a, 16b) qui s'étendent obliquement et notamment transversalement à l'étendue de la goujure à copeau.

17. Dispositif selon la revendication 16, **caractérisé en ce que** les nervures de stabilisation (16a, 16b) sont réalisées en forme de bourrelet, et **en ce que** la hauteur de crête (16c) des nervures de stabilisation (16a, 16b) diminue dans la suite de l'étendue à partir de l'arête de coupe (4, 6a, 6b), et est moindre que la hauteur des arêtes de coupe (4, 6a, 6b).

18. Dispositif selon l'une des revendications 14 à 17, **caractérisé en ce qu'**une transition entre nervure (8a, 8b) et protubérance (9) est formée par une goujure de transition (22) à section transversale concave, qui relie un tronçon avant (13a) à un tronçon latéral (13b) dé la goujure à copeau.

19. Dispositif selon la revendication 18, **caractérisé en ce que** la goujure de transition (22) s'étend, dans la direction longitudinale, de manière convexe ou rectiligne par rapport à une arête de coupe (4, 6a, 6b) voisine.
